# EUROPÄISCHE PATENTANMELDUNG

(11) **EP 0 930 012 A1**
(43) Veröffentlichungstag der Anmeldung: **21.07.1999**
(21) Anmeldenummer: 98100797.4
(22) Anmeldetag: 19.01.1998
(51) Int. Cl.: A21C 11/10, B23K 26/00

(54) **Verfahren zum Ausschneiden von Lebensmittelpellets**

(71) Anmelder: ZWEIFEL POMY-CHIPS AG, 8957 Spreitenbach (CH)
(72) Erfinder: Flury, Roger, 5400 Baden (CH); Blumenthal, Marco, 8919 Rottenschwil (CH)
(74) Vertreter: Blum, Rudolf Emil Ernst

(57) **Zusammenfassung**

Die vorliegende Erfindung betrifft ein Verfahren zum Ausschneiden von Lebensmittelpellets mit Hilfe einer Laservorrichtung.

Ausserdem betrifft die vorliegende Erfindung ein ausgeschnittenen Lebensmittel-Pellet, der mittels einer Laservorrichtung erhältlich ist.

## Beschreibung

Die vorliegende Erfindung betrifft ein Verfahren zum Ausschneiden von Lebensmittelpellets gemäss dem Oberbegriff des unabhängigen Anspruchs 1, ein ausgeschnittenen Lebensmittel-Pellet gemäss dem Oberbegriff des Anspruchs 12, sowie der Verwendung einer Laservorrichtung zum Ausschneiden von Pellets aus einem Lebensmittelteig gemäss dem unabhängigen Anspruch 13.

Snack-, Teig- sowie Backprodukte der verschiedensten Art erfreuen sich beim Konsumenten einer grossen Beliebtheit. Im Fall von Kartoffelchips werden die Endprodukte aus Kartoffelscheiben als Substrat erhalten, während bei einer Reihe von expandierten Snack-Produkten oder diversen Backwaren von einem aus verschiedenen Mehlprodukten hergestellten Teig ausgegangen wird. Bei Backwaren, wie beispielsweise Keksen, wie auch einer Reihe von Snackprodukten wird zunächst ein entsprechender Teig zubereitet, aus welchem im nächsten Schritt sogenannte Pellets, d.h. entsprechende Rohlinge hergestellt werden, die dann anschliessend gebacken oder fritiert werden.

Die gegenwärtig angewendeten Herstellungsverfahren von Lebensmittelpellets für die weitere Zubereitung von fritierten, heissluftexpandierten (getoasteten) gekochten oder gebackenen Waren bedienen sich dabei in der Regel der Walzentechnik, um die gewünschten Formen bzw. Rohlinge aus dem Teigsubstrat gewissermassen auszustanzen.

Die für das Ausstanzen von Formen aus einem Lebensmittelteig verwendeten Walzen sind vergleichsweise kostenintensiv, die Entwicklungszeit von neuen Formen ist hoch und funktioniert nur über die Anschaffung einer neuen, teuren Walze. Darüber hinaus ist keine Formoptimierung während der Produktion möglich, weil eine Walze eine starre und nicht-veränderbare Einzelfertigung darstellt. Auch sind die Designmöglichkeiten bei Walzen technisch ausgesprochen beschränkt, da es beispielsweise unmöglich ist, Eckenformen auf einen Teig formbeständig zu übertragen.

Auch der Ausnutzungsgrad bezüglich des Ausstanzungsumfangs eines Lebensmittel-Sheets (Teig in einer Blattform) ist mit etwa 50% vergleichsweise niedrig, so dass unaufhörlich die nicht verwendete Teigreste in einem weiteren Verfahrensschritt in den Extruder zurückgeführt werden müssen.

Schliesslich gestaltet sich der Ablauf des Ausstanzens von Formen, d.h. von Pellets aus einem Lebensmittelteig verfahrenstechnisch relativ aufwendig, weil zur Verhinderung des Anklebens des Teigs an der Walze umfangreiche Kühlungs- und Trocknungsmassnahmen erforderlich sind. Ausserdem können die letztendlich gebildeten Lebensmittelpellets nur mittels einer Schlagwalze aus dem Sheet (Teig in Blattform) entfernt werden, was einen weiteren Aufwand darstellt.

Durch die Summe der oben aufgezählten Probleme und Beschränkungen wird daher klar, dass das herkömmliche Verfahren zur Herstellung von Lebensmittelpellets auf der Grundlage von Walzen, insbesondere in bezug auf die Handlichkeit, die Wirtschaftlichkeit, die Vielfältigkeit der Einsatzmöglichkeiten unbefriedigend ist.

Es war ein Ziel der vorliegenden Erfindung ein Verfahren bereitzustellen, welches die oben genannten Nachteile zumindest teilweise vermeidet.

Es war ein weiteres Ziel der vorliegenden Erfindung Lebensmittelpellets bereitzustellen, welche mittels der Lasertechnik erhalten werden können und dabei den herkömmlichen Pellets keineswegs unterlegen sind.

Die oben genannten Ziele werden gemäss den unabhängigen Ansprüchen gelöst.

Beim erfindungsgemässen Verfahren zum Ausschneiden einer Pelletform aus einem Lebensmittelteig wird eine Laservorrichtung zum Ausschneiden des besagten Pellet, d.h. der Form, aus dem Lebensmittelteig verwendet.

Besonders bevorzugt wird für das erfindungsgemässe Verfahren eine Vorrichtung verwendet, welche einen Kohlendioxid-Laser mit einer für einen Kohlendioxid-Laser typischen Wellenlänge bzw. Wellenlängenbereich aufweist. Bevorzugte Wellenlängen, welche für das erfindungsgemässe Verfahren mittels eines Kohlendioxid-Lasers verwendet werden, liegen dabei in einem Bereich von 2000 bis 2100 nm, ganz besonders bevorzugt von 2064 bis 2096 nm.

Der Teig selbst kann völlig unterschiedlicher Beschaffenheit sein, da er im wesentlichen unkritisch ist. Der Teig kann demnach aus Weizenmehl, Maismehl, Reismehl, Kartoffelstärke weiteren Zusätzen und Komponenten sowie Wasser oder Milch oder anderen flüssigen Stoffen zubereitet sein. Der Lebensmittelteig kann dabei letztendlich der Herstellung von Snackprodukten, z.B. heissluftexpandierten Snacks, oder auch Teigwaren, wie Nudeln, oder Backwaren, wie Blätterteig-Backwaren dienen.

In einer bevorzugten Ausführungsform wird der Teig in Form eines Sheets, d.h. eines kontinuierlichen, dünnen, flachen, gleichmässigen Blatts auf einem Tisch dem Laser zum Ausschneiden der Pellets (Formen) zugeführt. Die Zufuhr kann dabei in einem kontinuierlichen oder diskontinuierlichen Betrieb gestaltet werden.

Die Brennstärke, d.h. die Wirksamkeit des Lasers als Schneidewerkzeug ist in seinem Brennpunkt am ausgeprägtesten. Folglich wird der Abstand zwischen der Laservorrichtung und dem Lebensmittelteig-Substrat vorzugsweise so eingestellt, dass sich das Substrat genau im Brennpunkt des Lasers befindet.

Die Laservorrichtung umfasst vorzugsweise auch eine Computereinheit, die nicht nur die Führung des Lasers zum Ausschneiden der Pellets steuert, sondern der auch das elektronische Erzeugen und elektronische Speichern von Mustern und Formen ermöglicht, welche ihrerseits je nach Bedarf zu jedem Zeitpunkt modifiziert werden können, ohne dass dabei ein grosser Aufwand erforderlich wäre, wie dies beispielsweise bei der Walzentechnik der Fall ist, wo eine neue Formgebung für die herzustellenden Pellets unmittelbar eine neue, teure Walze erforderlich machen würde.

Die ausgeschnittenen Pellets werden vom Teigrückstand, beispielsweise mittels Druckluft, getrennt. Dabei wird ersichtlich, dass einerseits der bei der Walzentechnik gebräuchliche Kühlungs- und Trocknungsaufwand zur Verhinderung des Anklebens des Teigs an der Walze nicht erforderlich ist, andererseits ist auch keine Schlagwalze zur Entfernung der Pellets aus dem Sheet notwendig. Das Ausschneiden der Pellets durch eine Laservorrichtung ist mit weniger Vorbehandlungs-Aufwand verbunden und folglich wesentlich handlicher.

Das erfindungsgemässe Verfahren zum Ausschneiden von Formen (Pellets) aus einem Lebensmittelteig unter Verwendung einer Laservorrichtung zieht allerdings das lokale Auftreten von erhöhten Temperaturen in der unmittelbaren Nähe der Schnittstellen nach sich. Dies hat zur Folge, dass sich an der Schnittstelle lokal Oxidations- bzw. Verbrennungsprodukte des Lebensmittelteigs bilden können, welche für den Geschmack und vor allem für das Aussehen des aus dem Pellet herzustellenden Lebensmittelprodukt nachteilig sein können.

Dies ist insbesondere dann der Fall, wenn die erhaltenen Lebensmittelpellets anschliessend einem Fritiervorgang unterworfen werden sollen. Beim Fritieren treten üblicherweise Temperaturen von 180-190°C auf, welche eine Expansion (und in der Folge eine Dehydratisierung) des Lebensmittelpellet ermöglichen. Angesichts dieser vergleichsweise hohen Temperaturen, tendiert das Pellet dazu seine Flüssigkeit eher schlagartig abzugeben, indem diese als Wasserdampf vergleichsweise rasch aus dem Pellet auszutreten versucht. Durch den Übergang der im Pellet vorhandenen Flüssigkeit in Wasserdampf findet einerseits eine Expansion des Pellets statt, während der aus dem Pellet letztendlich ausgetretene Wasserdampf gewissermassen als Nebeneffekt eine Schutzhülle um das besagte Pellet herum bildet, welche dieses vor einer Verbrennung durch das äusserst heisse Öl schützt. Es bildet sich auf diese Weise ein zeitlich begrenztes, dynamisches Gleichgewicht an der Pelletoberfläche zwischen der Öl- und der Dampfphase, so dass ein unmittelbares und rasches Verkohlen der Pellethülle zunächst nicht stattfinden kann. Sobald sich schliesslich aber die schützende Dampfhülle um das Pellet verflüchtigt hat, wird die Pelletoberfläche durch die hohen Öltemperaturen angegriffen, so dass diese verkohlt.

Durch die erfindungsgemässe Laserbehandlung zum Ausschneiden von Pellets aus einem Lebensmittelteig werden auf der einen Seite Ablagerungen von Ascherückständen aus den lokalen Verbrennungsprodukten bzw. Verdampfungsrückständen erzeugt, während auf der anderen Seite auch eine Vertrocknung sowie eine Vorexpansion der Ränder durch die hohen Lasertemperaturen bewirkt wird. Darüber hinaus werden die vorexpandierten Stellen bei einem nachfolgenden Fritieren regelrecht verkohlt, weil sich dort keine Flüssigkeit mehr befindet, um die oben erwähnte Dampf/Öl-Grenzschicht auszubilden, welche die Pelletoberfläche vor dem Verkohlen schützt.

In einer ganz besonders bevorzugten Ausführungsform umfasst die Laservorrichtung des erfindungsgemässen Verfahrens zum Ausschneiden von Lebensmittelpellets auch eine Drucklufteinheit, mit welcher die besagten Ablagerungen von Ascherückständen aus den lokalen Verbrennungsprodukten bzw. Verdampfungsrückständen mittels Druckluft mechanisch entfernt werden können. Vorzugsweise wird daher simultan mit dem Laserlicht Druckluft von zwischen 1 bis 20 bar, vorzugsweise von 4 bis 10 bar, auf die Schnittstellen appliziert, so dass die Schneiderückstände an den Schnittstellen weggeblasen werden.

Für den Fall, dass die mittels einer Laservorrichtung ausgeschnittene Lebensmittelpellets anschliessend einem Expansionsvorgang, insbesondere einem Fritiervorgang, oder einem Heissluftexpansionsvorgang, unterworfen werden sollen, umfasst die Laservorrichtung in einer ganz besonders bevorzugten Ausführungsform eine Einheit zum Aufbringen von Wasser zur Befeuchtung der durch den Laser erzeugten Schnittstellen. Vorzugsweise umfasst daher die Laservorrichtung eine Dampferzeugungs- und Applikationseinheit. Damit kann simultan mit dem Laserlicht Wasserdampf von 1 bis 10 bar, vorzugsweise von 2 bis 6 bar, auf die Schnittstelle appliziert und so die Schnittstelle des Teigs während dem Schneidevorgang kontinuierlich mit Dampf befeuchtet werden.

Vorzugsweise wird der Wasserdampf mittels einer separaten Düse direkt an die Schnittstellen des Lebensmittelteigs herangeführt, weil eine Einspeisung des Wasserdampfes direkt in den Laserkopf schlecht funktioniert. Der in den Kopf eintretende Dampf beschlägt die Linse und schwächt somit den Laserstrahl, was sich seinerseits in einem unbefriedigenden Schneideverhalten äussert.

Die genaue Vorrichtung zur direkten Einspeisung des Wasserdampfs an die Schnittstellen des Lebensmittelteigs ist dabei nicht kritisch. In einer bevorzugten Ausführungsform wird aber ein Kupferrohr aussen an die Druckluftdüse angelötet und der Dampf durch dieses Rohr auf die Schnittstelle des Lasers geleitet.

Wichtig ist, dass der Wasserdampf tatsächlich unmittelbar an der Schnittstelle appliziert wird, um so eine unmittelbare Befeuchtung und Abkühlung der Schnittstelle zu bewirken und ein Absetzen sowie Festkleben von Verbrennungsrückständen zu verhindern.

Eine Ausschneidevorrichtung bestehend aus einem Laser, sowie einem Dampferzeuger bzw. Applikator bietet daher die folgenden Vorteile:

Einerseits reisst der Dampfstrahl die Schneiderückstände mit und verhindert die Ablagerung auf dem Pellet.

Andererseits befeuchtet der Dampf die Schnittränder unmittelbar nach dem Schnitt und verhindert somit das Verbrennen während des Fritierens.

Schliesslich kühlt der Dampf die Schnittränder unmittelbar nach dem Schnitt und verhindert die Entstehung von vorexpandierten Stellen, welche während des Fritierens verbrennen.

Insbesondere für die Herstellung von letztendlich expandierten, z.B. fritierten Lebensmittelprodukten wie z.B. Snacks, können somit mit einer Vorrichtung enthaltend einen Laser und eine Dampferzeugungseinheit Pellets mit einem sauberen, scharfen Schnitt hergestellt werden, welche nach dem Expandieren, z.B. Fritieren, keine braun/schwarzen Ränder hatten.

Ein weiterer Gegenstand der vorliegenden Erfindung besteht in den ausgeschnittenen Pellets aus einem Lebensmittelteig, welche aus dem erfindungsgemässen Verfahren erhältlich sind. Die Lebensmittelpellets werden aus einem Lebensmittelteig mittels eines Lasers ausgeschnitten und können anschliessend fritiert, gekocht, getoastet oder gebacken werden, um das letztendlich gewünschte Snackprodukt, Teigware oder Gebäck zu liefern.

Ein letzter Gegenstand der vorliegenden Erfindung besteht in der Verwendung einer Laservorrichtung zum Ausschneiden von Pellets aus einem Lebensmittelteig.

Im folgenden soll nun die vorliegende Erfindung anhand eines Beispiels verdeutlicht werden, wobei das Beispiel nicht als beschränkend auf den Schutzbereich anzusehen sind.

### Beispiel

### Herstellung eines Pellet aus einem Reismehlteig

40 kg eines Teigs, der aus Reismehl, Kartoffelstärke, Geschmacksprodukten sowie Hilfsstoffen zubereitet wurde, wird zu einem Sheet (Blattform) einer Dicke von 1,5 cm gepresst und kontinuierlich auf den Bearbeitungstisch der Laservorrichtung gelegt, wo mittels der Lasereinheit die gewünschten Formen ausgeschnitten werden. Die ausgeschnittenen Formen werden unmittelbar mittels Druckluft entfernt.

Die Laseranlage umfasst einen Kohlendioxid-Laser mit einer für Kohlendioxid-Laser typischen Wellenlänge von 2064-2096 nm und einer Leistung von 100 Watt der Firma Lang-Laser System GmbH aus Deutschland, und ist auf einem Kreuztisch von 1,5 m · 1,5 m aufgebaut. Der über einen Computer gesteuerte Kreuztisch erlaubt es, mit dem Laser jede beliebige Form mit gewünschter Genauigkeit und Geschwindigkeit zu schneiden. Der Laser ist in bezug auf die Leistung, den Brennpunkt und der Dampfzufuhr stufenlos regelbar. Die Dampfzufuhr wird mittels einer zur Laserdüse separaten Röhre direkt an die Schnittstellen des Lebensmittelteigs herangeführt.

Der Laserkopf wird auf eine Geschwindigkeit von 3500 mm/min eingestellt, wobei die Kopfhöhe 19,7 mm und der Brennpunkt auf 3,0 mm eingestellt wird. Der Wasserdampfdruck wird auf 3,0 bar eingestellt.

Der Schneidevorgang wird mit 100%-iger Leistung des Lasers durchgeführt.

Im Ergebnis werden Formen (Pellets) von einer Dicke von 1,5 cm und einer Länge von 4 cm erhalten, welche in Ihrer Qualität denjenigen, welche mittels der Walztechnik erhalten werden zumindest ebenbürtig sind.

Die durch das erfindungsgemässen Formen sind allerdings in bezug auf deren Design vielfältiger und leicht veränderbar. Ausserdem können feine Strukturen wie z.B. Augen, erhalten werden, wie sie durch Ausstanzen keineswegs zu erzielen sind. Das Verfahren umfasst wesentlich weniger Aufwand und die Pellets können mit weniger Teigrückführung erhalten werden, welcher beim herkömmlichen Walzenverfahren wieder in die Sheet-Produktion zurückgeführt werden muss.

## Patentansprüche

1. Verfahren zum Ausschneiden einer Pelletform aus einem Lebensmittelteig, dadurch gekennzeichnet, dass eine Laservorrichtung zum Ausschneiden des Pellets aus dem Lebensmittelteig verwendet wird.

2. Verfahren nach Anspruch 1, dadurch gekennzeichnet, dass die Laservorrichtung einen Kohlendioxid-Laser mit einer für einen Kohlendioxid-Laser typischen Wellenlänge bzw. Wellenlängenbereich umfasst.

3. Verfahren nach Anspruch 2, dadurch gekennzeichnet, dass ein Wellenlängenbereich von 2000 bis 2100 nm, bevorzugt von 2064 bis 2096 nm verwendet wird.

4. Verfahren nach einem der Ansprüche 1 bis 3, dadurch gekennzeichnet, dass die Laservorrichtung eine Computereinheit umfasst, mit welcher der Laser gesteuert und die auszuschneidenden Formen elektronisch erzeugt, verändert und abgespeichert werden können.

5. Verfahren nach einem der Ansprüche 1 bis 4, dadurch gekennzeichnet, dass der Teig als flaches, dünnes, gleichmässiges Blatt kontinuierlich oder diskontinulierlich auf einem beweglichen Tisch dem Brennpunkt des Lasers zugeführt wird, und durch diesen definierte, Formen ausgeschnitten werden.

6. Verfahren nach einem der Ansprüche 1 bis 5, dadurch gekennzeichnet, dass die Laservorrichtung eine Drucklufteinheit umfasst, mit welcher simultan zum Laserlicht Luft auf den Brennpunkt appliziert wird.

7. Verfahren nach Anspruch 6, dadurch gekennzeichnet, dass die Druckluft mit einem Druck von zwischen 1 bis 20 bar, vorzugsweise von 4 bis 10 bar, auf die Schnittstellen appliziert wird.

8. Verfahren nach einem der Ansprüche 1 bis 7, dadurch gekennzeichnet, dass die Laservorrichtung eine Einheit zur Applikation von Wasser umfasst, mit welcher simultan zum Laserlicht Wasser auf die Schnittstelle appliziert wird und so die Schnittstelle des Teigs während dem Schneidevorgang kontinuierlich befeuchtet wird.

9. Verfahren nach Anspruch 8, dadurch gekennzeichnet, dass die Einheit zur Applikation von Wasser eine Wasserdampferzeugungs- und Applikationseinheit ist.

10. Verfahren nach einem der Ansprüche 8 oder 9, dadurch gekennzeichnet, dass das Wasser in Form von Wasserdampf mit einem Druck von zwischen 1 bis 10 bar, vorzugsweise von 2 bis 6 bar auf die Schnittstellen appliziert wird.

11. Verfahren nach einem der Ansprüche 8 bis 10, dadurch gekennzeichnet, dass der Wasserdampf mittels einer separaten Düse direkt an die Schnittstellen des Lebensmittelteigs herangeführt wird.

12. Ausgeschnittenes Pellet aus einem Lebensmittelteig, erhältlich nach dem Verfahren gemäss einem der Ansprüche 1 bis 11.

13. Verwendung einer Laservorrichtung zum Ausschneiden von Pellets aus einem Lebensmittelteig.
